# EUROPEAN PATENT SPECIFICATION

(11) **EP 2 080 567 B1**
(45) Date of publication and mention of the grant of the patent: **19.10.2011**
(21) Application number: 09150628.7
(22) Date of filing: 15.01.2009
(51) Int. Cl.: B08B 9/055, F16L 55/46

(54) **Stop device for a cleaning element in a pipe for the distribution of concrete**
Stoppvorrichtung für ein Reinigungselement in einem Rohr zur Verteilung von Beton
Dispositif d'arrêt pour élément de nettoyage dans un tuyau pour la distribution de béton

(30) Priority: 18.01.2008 IT UD20080010
(43) Date of publication of application: 22.07.2009
(73) Proprietor: Cifa S.P.A., 20030 Senago, Milano (IT)
(72) Inventor: Pirri, Nicola, 20146 Milano (IT); Mosca, Raffaele, 21047 Sanonno (VA) (IT); Ferrè, Fabio, 23017 Morbegno (SO) (IT)
(74) Representative: Petraz, Gilberto Luigi

(56) References cited:
- DE-A1- 3 244 380
- DE-A1-102005 054 336
- DE-C1- 3 229 103
- JP-A- 2004 237 223
- US-A- 6 029 302

## Description

### FIELD OF THE INVENTION

The present invention concerns a stop device for a cleaning element in a pipe for the distribution of concrete or other material similar to concrete, used on heavy work vehicles, such as for example a truck or concrete mixer.

In particular, the stop device is applied to a mouth of a concrete distribution pipe for the selective insertion, into the cavity of the pipe, of an element suitable to stop the advance of a cleaning element, normally called a ball, introduced at one end of the distribution pipe, shot at high pressure or sucked in, in order to remove residual concrete from the walls of the distribution pipe.

### BACKGROUND OF THE INVENTION

It is known to clean a pipe for the distribution of concrete, or material similar to concrete, when it has finished delivery, by means of a ball, preferably made of rubber material, of a size slightly greater than the diameter of the distribution pipe, which is shot at high pressure into the pipe or sucked in, to make it scrape against the wall of the pipe and remove therefrom residues or incrustations of concrete. At one mouth of the pipe there is a stop element, able to slide axially in a corresponding stopper so as to be selectively disposed in a position where it stops the advance of the ball. The mouth where the stop element is provided is used to remove the ball, held by the stop element, from the distribution pipe at the end of cleaning.

During the delivery of the concrete the stop element is disposed in a first position, where it does not impede the advance of the concrete inside the distribution pipe.

During the cleaning of the pipe, the stop element is disposed in the corresponding stopper in a second position, inside the distribution pipe, so as to at least partly occupy the seating where the ball advances inside the pipe.

One disadvantage of the known stop element is that, during the delivery of the concrete, the stresses on the wall of the distribution pipe in correspondence with the mouth, closed at the surface by the stopper, are very high and contribute to the premature wear of the portion of distribution pipe associated with the mouth, and may even cause it to break due to stress. This is because the free volume between the stopper and the cavity of the pipe, when the concrete is sucked in, causes localized vortexes and depressions with consequent stresses concentrated on the section of the pipe adj acent to the zone where the stopper is inserted.

Document US-A-6,029,302 is known which describes a scraper for cleanable pipeline systems, slideable in a cylindrical housing to which the scrapeable pipeline section is connected. The scraper is removable through a hole in the cylindrical housing.

Rods are provided to be selectively inserted into the cylindrical housing through specific openings made in the same cylindrical housing, in order to act as stop means for the scraper.

This known scraper has a complex constructional design at least because of the provision of the hole for removing the scraper and also of the openings for the rods.

Moreover, a further disadvantage of this type of scraper is that the provision of surfaces with discontinuity defined by the hole for the scraper and the openings and also the changes in the slope of the cross-section connecting the housing of the scraper and the scrapeable pipeline, where some openings for the rods are made, determine, also in this case, vortexes and depressions, with consequent stresses in the zone adjacent the stop means. In particular, particles and coarse crushed aggregate, which are typical in concrete, hit said surfaces with discontinuity of the cylindrical housing and the pipeline, thus causing the premature wear thereof and the formation of holes.

US-A-6,029,302 discloses the features of the preamble of claim 1.

Purpose of the present invention is therefore to achieve a stop device for a cleaning element in a pipe for the distribution of concrete, or material similar to concrete, which allows to increase the operating duration of the distribution pipe and to prevent localized stresses on the wall of the pipe.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a stop device for a cleaning element in a pipe for the distribution of concrete, or material similar to concrete, according to the present invention, is suitable to be coupled with a mouth of the distribution pipe, or a portion thereof, through which a cleaning element or ball is removed, used to clean the inner wall of the pipe from residues or incrustations of concrete.

The stop device comprises a stopper suitable to be coupled, with a lower portion thereof, in a position to close said mouth both during the distribution of the concrete and also during the cleaning of the distribution pipe.

The stop device according to the present invention also comprises a stop element, elongated in shape, able to be inserted in a hole of the stopper, and to slide between a first position, at least partly outside the pipe and assumed during the distribution of the concrete, and a second position, inside the pipe and substantially transverse to the direction of advance of the ball, during the cleaning of the pipe.

According to a characteristic feature of the present invention, the lower portion of the stopper is associated with an internal cavity of the mouth and comprises a body able to fill, during use, substantially the whole volume defined inside by the mouth.

In particular, in the preferential form of embodiment, the surface of said lower portion, disposed during use toward the inside of the distribution pipe, is shaped so as to define, in correspondence with the portion of distribution pipe comprising the mouth, together with the internal surface of the wall of the distribution pipe, a continuous profile indistinguishable from the internal profile of the distribution pipe in correspondence with transverse sections of the distribution pipe, before and after said portion of the distribution pipe.

In this way, when the stopper is disposed coupled to close the mouth, during the delivery of the concrete, the stresses on the wall of the distribution pipe in correspondence with and in proximity to the mouth, and due to the pressure exerted by the concrete, are lower and substantially comparable to the stresses normally exerted on adjacent segments of the wall of the pipe. This leads to less wear on the zones of the wall of the pipe adjacent to the zone where the stopper is inserted, therefore, a smaller risk of localized stresses, and therefore longer operating duration.

According to another characteristic feature of the present invention, the stopper comprises attachment elements suitable to cooperate with associated clamping elements disposed on the distribution pipe in order to clamp the stopper in a position to close the access mouth to the pipe.

In a variant, the attachment elements comprise anti-unscrewing means.

According to an advantageous solution, the attachment elements are made in a single piece with the stopper of the stop device.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of a stop device for a cleaning element in a concrete distribution pipe according to the present invention;
- fig. 2 is an enlarged section view from II to II of fig. 1;
- fig. 3 is a view from above of fig. 1;
- fig. 4 is an enlarged view from above of a detail of the stop device according to the present invention;
- fig. 5 is a lateral view of fig. 4;
- fig. 6 is a section view from VI to VI of the detail in fig. 6;
- fig. 7 is a three-dimensional view of the stop device coupled with a concrete distribution pipe.

### DETAILED DESCRIPTION OF A PREFERENTIAL FORM OF EMBODIMENT

With reference to the attached drawings, a stop device 13 for a cleaning element for a pipe 10 for the distribution of concrete or other material similar to concrete, according to the present invention, is coupled with a lateral mouth 20 of the distribution pipe 10. The distribution pipe 10 comprises a plurality of segments 11 joined by joints of a known type and constrained by attachment elements 12 to an arm for the distribution of the concrete, for example extendible, mounted on a work vehicle of a known type and not shown in the drawings. At least a first segment 11 of said distribution pipe 10 is connected directly to the work vehicle.

The lateral mouth 20 of the distribution pipe 10, with a substantially circular section, is used for the removal of a cleaning element, or ball, shot at high pressure or sucked in at one end of the distribution pipe 10, so as to clean the internal walls of the distribution pipe 10 of residues and incrustations by means of scraping, at the end of the delivery of concrete.

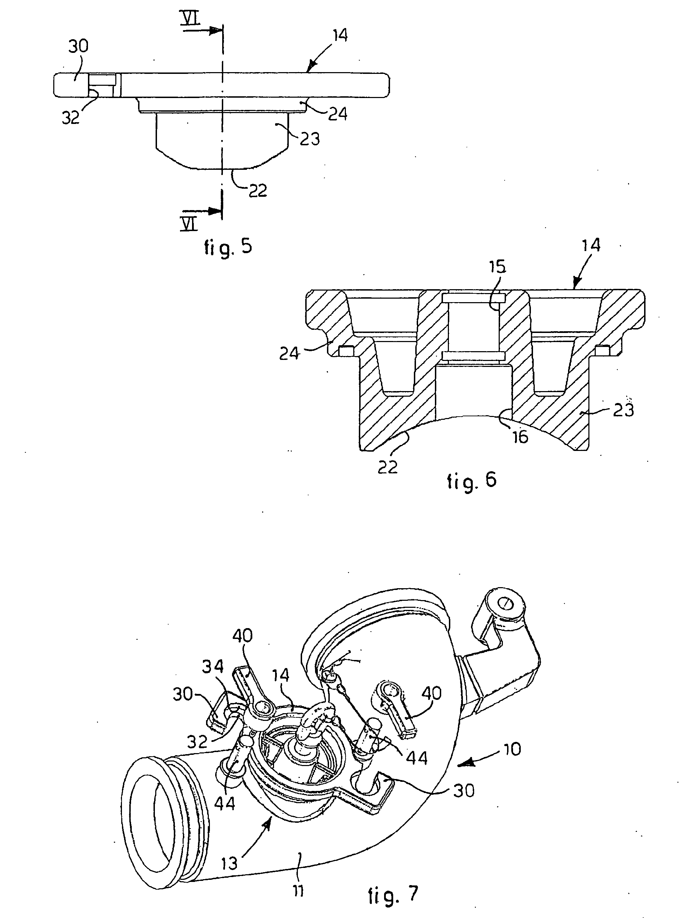

The stop device 13 comprises a stopper 14 suitable to be coupled, with a lower portion thereof, in a position to close said mouth 20, both during the distribution of the concrete and also during the cleaning of the distribution pipe 10. The stopper 14 comprises a circular lower portion provided with a circular step 24 resting on the lateral mouth 20 and a cylindrical lateral surface 23 (figs. 5 and 6) coupled with the internal cylindrical surface of the mouth 20.

The stopper 14 also comprises a hole 15 able to define, together with a hollow seating 16, a through seating for a stop element 17, also denominated hereafter as a stop, and suitable to clamp the ball during the cleaning of the internal wall of the distribution pipe 10. The stop 17 is able to slide axially through said through seating between a first position, at least partly outside the distribution pipe 10, and a second position inside the distribution pipe 10 and transverse to the direction of advance both of the ball and also of the concrete, so as to stop the advance of the ball during said cleaning. One end 18 of the stop 17 is housed in the hollow seating 16 when the stop 17 is disposed in its first position.

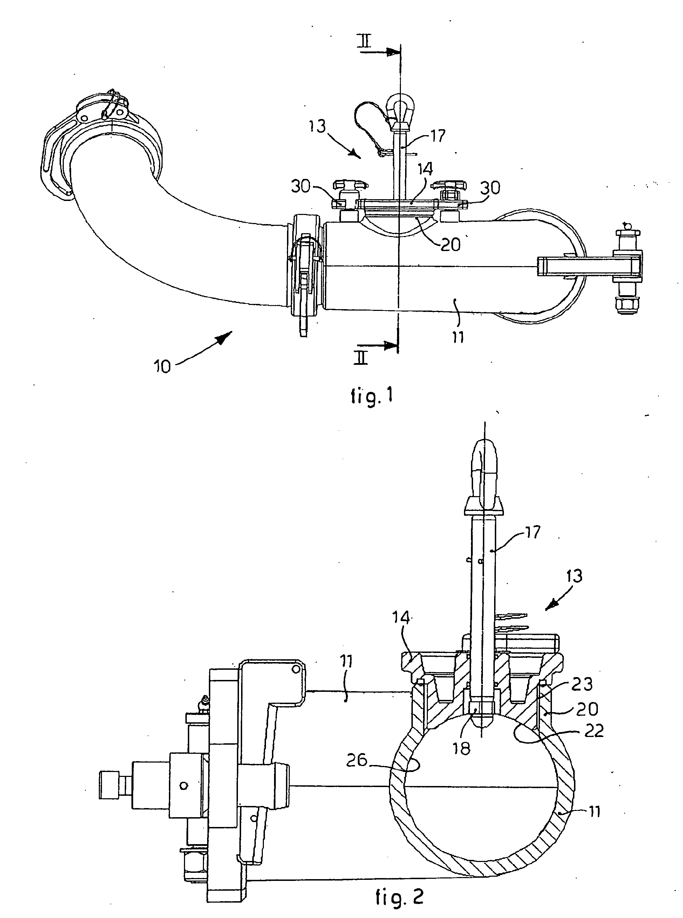

According to a characteristic feature of the present invention, the lower portion of the stopper 14 associated with the internal cavity of the mouth comprises a body suitable to fill, during use, the whole volume defined by said cavity. Furthermore, a lower surface 22 (figs. 2, 5 and 6) of said lower portion of the stopper 14, disposed during use toward the inside of the distribution pipe 10, is shaped so as to define a continuous profile, together with the shaping of the internal surface 26 of the wall of the distribution pipe 10. The continuous profile is such as to be indistinguishable from the internal profile of the distribution pipe 10 in correspondence with its transverse sections, before or after the mouth 20.

In this case the lower surface 22 of the stopper 14, disposed to close the mouth 20, and the internal surface 26 of the distribution pipe 10 in correspondence with the mouth 20, achieve a single internal profile whose transverse sections, defined by the intersection of planes orthogonal to said direction of advance, are substantially circular and continuous with the cross sections of the distribution pipe 10 before or after the portion comprising the mouth 20.

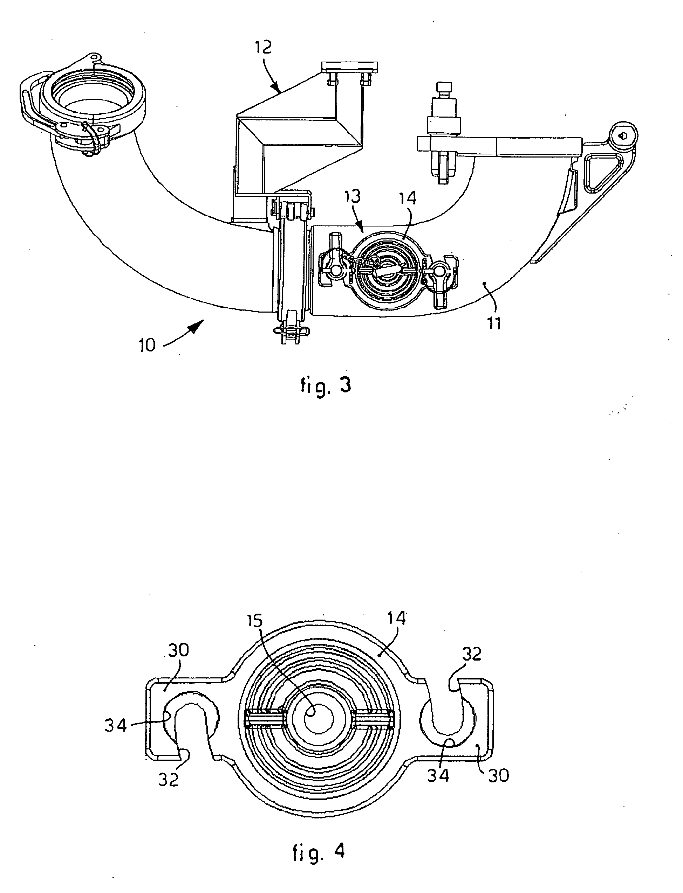

The stopper 14 also comprises two attachment wings 30 with a square or rectangular shape (fig. 4), diametrically opposite and protruding with respect to the body of the stopper 14, and suitable to be coupled with an equal number of cylindrical pins 44, disposed on the external surface of the distribution pipe 10 in order to clamp the stopper 14 in said closing position.

According to a preferential embodiment the attachment wings 30 are made in a single piece with the body of the stopper 14.

The attachment wings 30 cooperate with the pins 44 during a rotation of the stopper 14 in order to dispose it in said position to close the mouth 20. Each attachment wing 30 comprises anti-unscrewing means. In fact, each attachment wing 30 comprises a hollow seating 32 open on one side of the wing 30 and suitable to cooperate with the associated pin 44. The hollow seating 32 comprises an elongated U-shaped profile, rounded at one end suitable for coupling with the lateral surface of the pin 44, and substantially parallel to the external profile of the stopper 14. The transverse size of the hollow seating 32 is at least equal to the transverse thickness of said pins 44. Each attachment wing 30 also comprises a circular seating 34, substantially concentric to the terminal portion of said hollow seating 32, and such as to define, together with the corresponding hollow seating 32, a semi-circular step for the insertion of a corresponding holed end of a clamping handle 40 and suitable to clamp the stopper 14 in the closed position of the mouth 20. The clamping handle 40 is therefore coupled both with the pin 44 and also with the hollow seating 32 in order to prevent the rotation of the stopper 14 from its position where it closes the mouth 20.

The stop device 13 as described heretofore functions as follows.

During the normal delivery of concrete, the mouth 20 is closed by the stopper 14 in its closing position and with the stop 17 disposed in its first position.

At the end of the delivery of concrete, before the internal walls of the distribution pipe 10 are cleaned, the stop 17 is disposed in its second position, so as to occupy transversely the seating where the concrete advances, and therefore the ball, and obstruct the advance of the ball in correspondence with the mouth 20.

The ball is shot or sucked into the distribution pipe 10, for example by inverting the direction of functioning of the delivery pump, allowing to clean the walls due to the surface scraping of the ball in contact with the internal wall of the pipe 10. When, at the end of cleaning, the ball is stopped in its advance by the stop 17, the stopper 14 is removed from the mouth 20 so as to allow access inside the pipe 10 and the subsequent removal of the ball stopped by the stop 17. In order to remove the stopper 14 from the mouth 20, first each clamping handle 40 is removed from the associated pin 44 and then from the circular seating 34 of the attachment wing 30. Subsequently, the stopper 14 is rotated so as to disengage each pin 44 from the corresponding hollow seating 32 of the attachment wing 30. Finally, the stopper 14 is raised and removed from the mouth 20 and the ball is removed through the mouth 20.

At the end of cleaning the stopper 14 is again positioned in its position to close the mouth 20, performing in inverse sequence the removal operations just described.

It is clear that modifications and/or additions of parts may be made to the stop device 13 for a cleaning element in a pipe 10 for the distribution of concrete as described heretofore, without departing from the field and scope of the present invention.

It is also clear that, although the present invention has been described with reference to some specific examples, a person of skill in the art shall certainly be able to achieve many other equivalent forms of stop device 13 for a cleaning element in a pipe for the distribution of concrete, having the characteristics as set forth in the claims and hence all coming within the field of protection defined thereby.

## Claims

1. Stop device for a ball-type cleaning element in a pipe (10) for the distribution of concrete, or of other similar material, comprising:
- a stopper (14) able to be coupled with a lateral mouth (20) of said pipe (10), having a lower portion for closing said mouth (20) of said distribution pipe (10) in an operative position thereof,
- a stop element (17), elongated in shape and able to be inserted in a hole (15) of said stopper (14) and able to slide between a first position at least partly outside said distribution pipe (10), and a second position inside said distribution pipe (10) and transverse to the direction of advance of said ball-type cleaning element so as to stop it, wherein
said lower portion of said stopper (14) is associated during use with an internal cavity of the mouth (20) and comprises a body able to occupy substantially the whole volume defined inside said mouth (20) **characterized in that** said lower portion of said stopper (14) comprises a lower surface (22) disposed during use toward the inside of said distribution pipe (10), and arc-shaped so as to define, in correspondence with a segment of the distribution pipe (10) comprising said mouth (20), together with the internal surface (26) of the wall of the distribution pipe, a continuous single internal profile indistinguishable from the internal profile of the distribution pipe (10) and having transverse sections substantially circular and continuous with transverse sections of the distribution pipe (10) before and after said segment of the distribution pipe (10) comprising said mouth (20), and the lateral mouth (20) of said pipe (10) configured to allow the removal of the ball-type cleaning element through it after the ball-type cleaning element has been stopped inside the pipe (10).

2. Stop device as in claim 1, **characterized in that** said stopper (14) is removable from said mouth (20) to allow the removal of the ball-type cleaning element.

3. Stop device as in any claim hereinbefore, **characterized in that** said hole (15) comprises a hollow seating (16) able to house one end (18) of said stop element (17) disposed in said first position.

4. Stop device as in any claim hereinbefore, **characterized in that** said stopper (14) comprises attachment elements (30) able to be coupled with associated clamping elements (44) of said distribution pipe (10) in order to clamp said stopper (14) in said operative position for closing said mouth (20).

5. Stop device as in claim 4, **characterized in that** said attachment elements (30) comprise anti-unscrewing means.

6. Stop device as in claim or 5, **characterized in that** said attachment elements (30) of said stopper (14) are made in a single piece.

7. Stop device as in any claim from 4 to 6, **characterized in that** said clamping elements comprise pins (44).

8. Stop device as in claim 7, **characterized in that** said anti-unscrewing means of said attachment elements (30) comprises a hollow seating (32), open, able to cooperate with an associated pin (44) in said closing position, and having a U-shaped profile and a transverse size at least equal to the transverse thickness of said pin (44).

9. Stop device as in claim 8, **characterized in that** said anti-unscrewing means of said attachment elements (30) also comprises a circular seating (34), concentric to one end of the hollow seating (32) so as to define, together with said hollow seating (32), a semi-circular step able to house one end of a clamping handle (40).

10. Stop device as in claim 9, **characterized in that** said end of said clamping handle (40) comprises a hole able to be coupled during use with said circular seating (34), with one of said pins (44) for the anti-unscrewing clamping of said stopper (14) in said closing position.

11. Stop device as in any claim hereinbefore, **characterized in that** the mouth (20) has a substantially circular section for the removal of the ball-type cleaning element and the lower portion of the stopper (14) is provided with a circular step (24) resting on the mouth (20) and a cylindrical lateral surface (23) coupled with the internal cylindrical surface of the mouth (20).

## Patentansprüche

1. Anschlagvorrichtung für ein kugelartiges Reinigungselement in einem Rohr (10) zum Verteilen von Beton oder einem anderen ähnlichen Material, Folgendes umfassend:
- einen Stopper (14), der mit einer seitlichen Öffnung (20) des Rohrs (10) verbunden werden kann und einen unteren Abschnitt hat, um die Öffnung (20) des Verteilerrohrs (10) in einer Betriebsstellung von diesem zu schließen,
- ein Anschlagelement (17), das von der Form her langgestreckt ist und in ein Loch (15) des Stoppers (14) eingesteckt werden kann und zwischen einer ersten Position zumindest teilweise außerhalb des Verteilerrohrs (10) und einer zweiten Position innerhalb des Verteilerrohrs (10) und quer zur Vorrückrichtung des kugelartigen Reinigungselements gleiten kann, um es zu stoppen, wobei
der untere Abschnitt des Stoppers (14) während des Gebrauchs mit einem Innenhohlraum der Öffnung (20) verbunden ist und einen Körper umfasst, der im Wesentlichen das ganze im Inneren der Öffnung (20) gebildete Volumen einnehmen kann, **dadurch gekennzeichnet, dass** der untere Abschnitt des Stoppers (14) eine Unterseite (22) umfasst, die während des Gebrauchs zum Inneren des Verteilerrohrs (10) hin angeordnet und bogenförmig ist, um in Übereinstimmung mit einem die Öffnung (20) umfassenden Segment des Verteilerrohrs (10) zusammen mit der Innenfläche (26) der Wand des Verteilerrohrs ein durchgehendes einziges Innenprofil zu bilden, das sich vom Innenprofil des Verteilerrohrs (10) nicht unterscheiden lässt und Querschnitte hat, die Im Wesentlichen kreisrund und durchgehend mit Querschnitten des Verteilerrohrs (10) vor und nach dem die Öffnung (20) umfassenden Segment des Verteilerrohrs (10) sind, und
die seitliche Öffnung (20) des Rohrs (10) dazu ausgelegt ist, die Entnahme des kugelartigen Reinigungselements durch sie hindurch zuzulassen, nachdem das kugelartige Reinigungselement im Inneren des Rohrs (10) gestoppt wurde.

2. Anschlagvorrichtung nach Anspruch 1, **dadurch gekennzeichnet, dass** der Stopper (14) aus der Öffnung (20) entnommen werden kann, um die Entnahme des kugelartigen Reinigungselements zuzulassen.

3. Anschlagvorrichtung nach einem der vorhergehenden Ansprüche, **dadurch gekennzeichnet, dass** das Loch (15) einen Hohlsitz (16) umfasst, der ein Ende (18) des in der ersten Position angeordneten Anschlagelements (17) aufnehmen kann.

4. Anschlagvorrichtung nach einem der vorhergehenden Ansprüche, **dadurch gekennzeichnet, dass** der Stopper (14) Befestigungselemente (30) umfasst, die mit dazugehörigen Klemmelementen (44) des Verteilerrohrs (10) verbunden werden können, um den Stopper (14) in der Betriebsposition zum Schließen der Öffnung (20) festzuklemmen.

5. Anschlagvorrichtung nach Anspruch 4, **dadurch gekennzeichnet, dass** die Befestigungselemente (30) ein Lösen der Schraubverbindung verhindernde Einrichtungen umfassen.

6. Anschlagvorrichtung nach Anspruch 4 oder 5, **dadurch gekennzeichnet, dass** die Befestigungselemente (30) des Stoppers (14) einstückig hergestellt sind.

7. Anschlagvorrichtung nach einem der Ansprüche 4 bis 6, **dadurch gekennzeichnet, dass** die Klemmelemente Stifte (44) umfassen.

8. Anschlagvorrichtung nach Anspruch 7, **dadurch gekennzeichnet, dass** die ein Lösen der Schraubverbindung verhindernden Einrichtungen der Befestigungselemente (30) einen offenen Hohlsitz (32) umfassen, der in der Schließposition mit einem zugeordneten Stift (44) zusammenwirken kann und ein U-förmiges Profil und eine Quergröße hat, die zumindest gleich der Querdicke des Stifts (44) ist.

9. Anschlagvorrichtung nach Anspruch 8, **dadurch gekennzeichnet, dass** die ein Lösen der Schraubverbindung verhindernden Einrichtungen der Befestigungselemente (30) auch einen kreisförmigen Sitz (34) umfassen, der zu einem Ende des Hohlsitzes (32) konzentrisch ist, um zusammen mit dem Hohlsitz (32) eine halbkreisförmige Stufe zu bilden, die ein Ende eines Klemmgriffs (40) aufnehmen kann.

10. Anschlagvorrichtung nach Anspruch 9, **dadurch gekennzeichnet, dass** das Ende des Klemmgriffs (40) ein Loch umfasst, das während des Gebrauchs mit dem kreisförmigen Sitz (34) verbunden werden kann, wobei sich einer der Stifte (44) für die ein Lösen der Schraubverbindung verhindernde Klemmbefestigung des Stoppers (14) in der Schließposition befindet,

11. Anschlagvorrichtung nach einem der vorhergehenden Ansprüche, **dadurch gekennzeichnet, dass** die Öffnung (20) einen im Wesentlichen kreisrunden Querschnitt zur Entnahme des kugelartigen Reinigungselements hat, und der untere Abschnitt des Stoppers (14) mit einer kreisförmigen Stufe (24), die auf der Öffnung (20) aufliegt, und einer zylindrischen Seitenfläche (23) versehen ist, die mit der zylindrischen Innenfläche der Öffnung (20) verbunden ist.

## Revendications

1. Dispositif d'arrêt pour élément de nettoyage à boule dans un tuyau (10) pour la distribution de béton ou d'autre matériau similaire, comprenant :
- un bouchon (14) pouvant être couplé à une embouchure latérale (20) dudit tuyau (10), et dont la partie inférieure est destinée à fermer ladite embouchure (20) dudit tuyau de distribution (10) lorsque celui-ci est en position opérationnelle ;
- un élément d'arrêt (17), de forme allongée, pouvant être introduit dans un orifice (15) dudit bouchon (14) et pouvant coulisser entre une première position au moins partiellement extérieure audit tuyau de distribution (10), et une seconde position intérieure audit tuyau de distribution (10) et transversale à la direction d'avancée dudit élément de nettoyage à boule, de manière à l'arrêter, dans lequel
ladite partie inférieure dudit bouchon (14) est associée, à l'utilisation, à une cavité interne de l'embouchure (20) et comprend un corps pouvant occuper sensiblement tout le volume défini à l'intérieur de ladite embouchure (20), **caractérisé en ce que** ladite partie inférieure dudit bouchon (14) comprend une surface inférieure (22) dirigée, à l'utilisation, vers l'intérieur dudit tuyau de distribution (10) et formant un arc de manière à définir, au niveau d'un segment du tuyau de distribution (10) comportant ladite embouchure (20), conjointement à la surface interne (26) de la paroi du tuyau de distribution, un profil interne unique et continu, impossible à distinguer du profil interne du tuyau de distribution (10) et dont les sections transversales sont sensiblement circulaires et dans la continuité des sections transversales du tuyau de distribution (10), avant et après ledit segment du tuyau de distribution (10) comprenant ladite embouchure (20), et dans lequel l'embouchure latérale (20) dudit tuyau (20) est configurée de façon à permettre de retirer par son ouverture l'élément de nettoyage à boule, après l'arrêt de ce dernier à l'intérieur du tuyau (10).

2. Dispositif d'arrêt selon la revendication 1, **caractérisé en ce que** ledit bouchon (14) peut être retiré de ladite embouchure (20) pour permettre de retirer l'élément de nettoyage à boule.

3. Dispositif d'arrêt selon l'une quelconque des revendications précédentes, **caractérisé en ce que** ledit orifice (15) comprend un logement creux (16) pouvant accueillir une extrémité (18) dudit élément d'arrêt (17) placé dans ladite première position.

4. Dispositif d'arrêt selon l'une quelconque des revendications précédentes, **caractérisé en ce que** ledit bouchon (14) comprend des éléments de fixation (30) pouvant être couplés à des éléments de serrage (44) associés dudit tuyau de distribution (10), afin de serrer ledit bouchon (14) dans ladite position opérationnelle pour fermer ladite embouchure (20).

5. Dispositif d'arrêt selon la revendication 4, **caractérisé en ce que** lesdits éléments de fixation (30) comprenant un moyen anti-dévissage.

6. Dispositif d'arrêt selon la revendication 4 ou 5, **caractérisé en ce que** lesdits éléments de fixation (30) dudit bouchon (14) sont fabriqués d'un seul tenant.

7. Dispositif d'arrêt selon l'une quelconque des revendications 4 à 6, **caractérisé en ce que** lesdits éléments de serrage comprennent des ergots (44).

8. Dispositif d'arrêt selon la revendication 7, **caractérisé en ce que** ledit moyen anti-dévissage desdits éléments de fixation (30) comprend un logement creux (32), ouvert, pouvant coopérer avec un ergot associé (44) dans ladite position de fermeture, et présentant un profil en U et une dimension transversale au moins égale à l'épaisseur transversale dudit ergot (44).

9. Dispositif d'arrêt selon la revendication 8, **caractérisé en ce que** ledit moyen anti-dévissage desdits éléments de fixation (30) comprend aussi un logement circulaire (34), concentrique à une extrémité du logement creux (32) de manière à définir, avec ledit logement creux (32), un épaulement semi-circulaire pouvant accueillir une extrémité d'une poignée de serrage (40).

10. Dispositif d'arrêt selon la revendication 9, **caractérisé en ce que** ladite extrémité de ladite poignée de serrage (40) comprend un orifice pouvant être couplé, à l'utilisation, audit logement circulaire (34), au moyen de l'un desdits ergots (44) pour assurer le serrage anti-dévissage dudit bouchon (14) dans ladite position de fermeture.

11. Dispositif d'arrêt selon l'une quelconque des revendications précédentes, **caractérisé en ce que** l'embouchure (20) est de section sensiblement circulaire pour retirer l'élément de nettoyage à boule, et la partie inférieure du bouchon (14) est pourvue d'un épaulement circulaire (24) reposant sur l'embouchure (20) et d'une surface latérale cylindrique (23) couplée à la surface cylindrique interne de l'embouchure (20).
